# FASCICULE DE BREVET EUROPEEN

(11) **EP 3 197 670 B1**
(45) Date de publication et mention de la délivrance du brevet: **12.12.2018**
(21) Numéro de dépôt: 15767180.1
(22) Date de dépôt: 24.09.2015
(51) Int. Cl.: B29D 30/06, B29C 35/04

(54) **DISPOSITIF DE VULCANISATION POUR PNEUMATIQUE ET PROCÉDÉ DE VULCANISATION**
VULKANISATIONSVORRICHTUNG FÜR EINEN REIFEN UND VULKANISIERUNGSVERFAHREN
VULCANIZATION DEVICE FOR A TYRE AND VULCANIZATION METHOD

(30) Priorité: 24.09.2014 FR 1459018
(43) Date de publication de la demande: 02.08.2017
(73) Titulaire: Compagnie Générale des Etablissements Michelin, 63000 Clermont-Ferrand (FR)
(72) Inventeur: DESCHAUX, Stéphane, F-63040 Clermont-Ferrand Cedex 9 (FR); HERAULT, Stéphane, F-63040 Clermont-Ferrand Cedex 9 (FR)
(74) Mandataire: Noel, Luminita
(86) Numéro de dépôt international: PCT/EP2015/071998
(87) Numéro de publication internationale: WO 2016/046322

(56) Documents cités:
- EP-A1- 0 050 522
- EP-A1- 0 052 378
- EP-A1- 2 444 242
- US-A1- 2010 007 038

## Description

L'invention concerne le domaine de la vulcanisation des pneumatiques et s'intéresse plus particulièrement aux dispositifs de vulcanisation comportant une enceinte pour la cuisson des pneumatiques.

De manière connue, un dispositif de vulcanisation comprend une enceinte de cuisson à l'intérieur de laquelle est installée une ébauche de pneumatique. Un fluide caloporteur, en général de l'eau chaude ou de la vapeur sous pression, circule dans le dispositif de vulcanisation entre une source d'approvisionnement et l'enceinte de cuisson. L'enceinte comprend en règle générale un moule rigide destiné à former l'empreinte de la partie extérieure du pneumatique. Une membrane souple et élastique, sous l'effet de l'augmentation de la pression du fluide caloporteur vient se plaquer contre la paroi interne du pneumatique pour permettre aux éléments de sculpture du moule de pénétrer en profondeur dans l'ébauche de pneumatique à vulcaniser.

Le fluide caloporteur est introduit à haute température et haute pression à l'intérieur de la membrane souple de manière à la plaquer sur l'ébauche de pneumatique et à échanger des calories avec celle-ci, par l'intermédiaire de la membrane, afin de mouler l'ébauche de pneumatique dans les sculptures du moule rigide. La pression et la température doivent être maintenues à des valeurs préétablies pendant la durée de vulcanisation du pneumatique. Il a été constaté que lors de l'emploi de la vapeur saturée ou de l'eau chaude, une température élevée doit être maintenue à l'intérieur de la membrane pendant toute la durée de la vulcanisation. Par ailleurs, à des valeurs élevées de la pression, la température monte jusqu'à des valeurs trop élevées qui posent des problèmes de surcuisson de l'ébauche si elle est maintenue pendant une durée de cuisson complète.

Une solution à ces problèmes a été décrite dans le document US 4370283 qui utilise comme fluide caloporteur un mélange de vapeur d'eau et un gaz inerte à base d'azote, dans lequel la vapeur d'eau est le vecteur de température et le gaz inerte le vecteur de pression. Selon ce document, on introduit initialement dans la membrane souple la vapeur à pression atmosphérique et à la température de cuisson pendant quelques minutes, on arrête ensuite l'alimentation en vapeur pour y introduire le gaz inerte à haute pression pour plaquer l'ébauche contre les empreintes du moule. Toutefois, afin de pouvoir transférer de manière uniforme les calories à la membrane, et donc à l'ébauche de pneumatique à vulcaniser, le gaz inerte doit être uniformément mélangé avec la vapeur d'eau à l'intérieur de la membrane.

On connaît par ailleurs du document JP08-080530 un procédé de vulcanisation de pneumatique dans lequel, pour mélanger la vapeur et l'azote, on injecte en premier la vapeur d'eau à l'intérieur de la membrane, suivie par l'injection de l'azote et de plusieurs étapes d'agitation du mélange à l'intérieur de la membrane. Ce procédé de mise en oeuvre du mélange à plusieurs phases successives d'injection suivies de l'évacuation de condensats collectés au fond de la membrane, s'avère toutefois moins productif et complexe à mettre en oeuvre.

Pour remédier à ceci, le document CN 2389056 propose une autre solution selon laquelle la vapeur d'eau et l'azote sont injectés simultanément à l'intérieur de la membrane de cuisson. Selon ce document, on envoie l'azote selon une direction oblique orientée vers la partie supérieure de la membrane et la vapeur d'eau selon une direction horizontale à l'intérieur de la membrane. L'azote étant plus lourd que la vapeur d'eau, il retombe ensuite sur la vapeur qui se trouve en partie basse de la membrane. Toutefois, le mélange obtenu n'est pas homogène, car les deux gaz se stratifient, et, de ce fait, la température à l'intérieur de la membrane également, ce qui a comme conséquence des défauts de cuisson du pneumatique. De surcroît, une poche de condensats se forme au fond de la membrane, condensats qui doivent être évacués via un tuyau souple agencé à l'intérieur de celle-ci. Ceci complique la structure de la partie centrale du moule et a également des conséquences sur la productivité du procédé de vulcanisation.

On connaît par ailleurs le document EP 0 052 378 qui décrit un dispositif de vulcanisation comportant une membrane à l'intérieur de laquelle débouche un premier conduit d'alimentation en un mélange de vapeur et de gaz sous pression, un deuxième conduit d'évacuation étant prévu à côté du premier. Selon ce document, on mélange le gaz et la vapeur d'eau à l'extérieur de la membrane, préalablement à l'introduction du mélange dans la membrane via le premier conduit, lorsqu'il atteint les paramètres de cuisson préétablis. Tout en étant mixés avant leur introduction dans la membrane, on observe qu'une stratification des deux fluides se produit au cours de la cuisson, ce qui a pour effet une différence de température entre la partie haute et la partie basse du moule et, de ce fait, conduit à une cuisson non homogène du pneu.

L'objectif de l'invention est de fournir un dispositif de vulcanisation apte à remédier à ces inconvénients.

Cet objectif est atteint avec un dispositif de vulcanisation pour pneumatique comportant une partie centrale de support d'une membrane de cuisson destinée à venir se plaquer contre la partie interne d'un pneumatique, à l'intérieur d'un moule de cuisson, la partie interne de la membrane définissant une enceinte de vulcanisation dans laquelle circule un fluide caloporteur sous pression qui est un mélange de vapeur et de gaz sous pression, ledit fluide caloporteur étant amené à circuler entre un conduit d'entrée à l'intérieur de l'enceinte et un conduit de sortie de celle-ci, caractérisée en ce qu'il comprend un injecteur disposé à l'extérieur de l'enceinte de vulcanisation en étant relié aux conduits d'entrée et de sortie de celle-ci, ainsi qu'à un conduit d'alimentation en vapeur ou en gaz sous pression et qui est réalisé de manière à mélanger la vapeur ou le gaz sous pression du conduit d'alimentation avec le fluide sortant de l'enceinte de vulcanisation.

Selon l'invention, on utilise un tel injecteur pour réaliser le mélange de fluide présent dans l'enceinte de vulcanisation avec de la vapeur ou du gaz sous pression en provenance d'un conduit d'alimentation, lors de l'introduction du fluide en provenance du conduit d'alimentation dans l'injecteur et avant d'envoyer ce mélange dans l'enceinte de vulcanisation (qui correspond à l'intérieur de la membrane de cuisson lorsque le moule est fermé). Le fluide caloporteur qui est présent dans l'enceinte de vulcanisation pendant la vulcanisation est un mélange de vapeur d'eau et de gaz sous pression. La vapeur d'eau apporte les calories nécessaires lors de la cuisson et/ou une partie de la pression et un gaz sous pression qui apporte la pression ou le complément de pression nécessaire à l'atteinte des valeurs des paramètres de cuisson (température et pression) du mélange pour réaliser la vulcanisation du pneumatique. On choisit un fluide caloporteur sous forme d'un mélange de vapeur d'eau et de gaz sous pression afin de pouvoir régler les différents paramètres de cuisson (température et pression) de manière indépendant, l'injecteur permettant de bien les mélanger avant de les envoyer à l'intérieur de la membrane de cuisson et ceci avant et pendant la cuisson.

En effet, l'injecteur de l'invention permet de mélanger le fluide (vapeur ou gaz sous pression) qui arrive par son conduit d'alimentation avec celui qui est déjà présent à l'intérieur de la membrane de cuisson (vapeur et/ou gaz sous pression) pour obtenir un mélange homogène de l'ensemble. Le mélange étant homogène, il permet de transmettre les calories de manière homogène à l'ébauche de pneumatique, sans stratification dans la direction axiale des composants, et d'obtenir une cuisson uniforme du pneumatique.

Avantageusement, ledit injecteur comprend un tube à effet Venturi raccordé aux conduits d'entrée et de sortie de l'enceinte de vulcanisation et à un conduit d'alimentation en vapeur ou en gaz sous pression.

Le tube à effet Venturi permet un mélange uniforme de deux fluides basé uniquement sur une différence de pression des deux fluides à l'intérieur du tube. On évite ainsi l'utilisation d'une pompe ou autre dispositif mélangeur nécessitant une alimentation électrique. Ce tube permet ainsi d'aspirer le fluide déjà présent dans l'enceinte de vulcanisation (gaz ou mélange de gaz et vapeur) avec le fluide (gaz ou vapeur) qui arrive par le conduit d'alimentation.

Avantageusement, ledit tube à effet Venturi comprend une ouverture de sortie qui le relie à un conduit de vidange et de récupération de condensats.

De préférence, ledit tube à effet Venturi comprend un cône convergent d'éjection communiquant avec un cône convergent de mélange de vapeur ou gaz sous pression en provenance d'un conduit d'alimentation avec le fluide sortant de l'enceinte, ledit cône de mélange communiquant avec le conduit d'entrée dans l'enceinte via un cône divergent d'injection. Un tel tube à Venturi permet d'aspirer le fluide en provenance de l'enceinte de vulcanisation et de le mélanger avec la vapeur ou le gaz sous pression en provenance d'un conduit d'alimentation avant d'envoyer le mélange à l'intérieur de la membrane.

Avantageusement, ledit injecteur mélange la vapeur d'eau en provenance d'un conduit d'alimentation avec le gaz sous pression sortant de l'enceinte de vulcanisation.

Ainsi, on envoie initialement le gaz sous pression à l'intérieur de la membrane, afin de réaliser une première mise sous pression pour un prémoulage de l'ébauche de pneumatique, ensuite on introduit le fluide caloporteur dans l'injecteur qui apporte les calories et le complément de pression nécessaires à la cuisson. Ceci permet d'obtenir un mélange homogène des deux fluides et donc une température uniforme à l'intérieur de la membrane de cuisson dès le début de la cuisson.

De préférence, ledit injecteur mélange le fluide caloporteur de l'enceinte de vulcanisation avec la vapeur ou un gaz sous pression en provenance du conduit d'alimentation.

Ainsi, ledit injecteur réalise un mélange en continu, lors de la cuisson, en alimentant via l'injecteur l'enceinte de vulcanisation avec de la vapeur ou du gaz sous pression. Cette alimentation en gaz ou vapeur de l'injecteur permet d'aspirer le fluide caloporteur déjà présent dans la membrane et réaliser un brassage en continu de ce dernier, ce qui évite la stratification des fluides le composant et permet ainsi d'obtenir une température uniforme du mélange durant la cuisson.

Avantageusement le gaz sous pression est choisi parmi : l'azote, l'hydrogène ou l'air comprimé, pris seuls ou en combinaison. On choisit la vapeur d'eau pour des raisons économiques de chauffage et le gaz sous pression pour pouvoir régler sa pression indépendamment de la température. On préfère choisir un gaz inerte, tel l'azote afin de protéger la membrane de cuisson et de prolonger ainsi sa durée de vie.

L'objectif de l'invention est également atteint avec un procédé de vulcanisation qui utilise un dispositif selon l'invention.

De préférence, l'on alimente ledit injecteur en vapeur d'eau après avoir introduit préalablement le gaz sous pression dans l'enceinte de vulcanisation. Ceci permet de réaliser un mélange homogène des deux fluides avant la cuisson.

Avantageusement, on alimente ledit injecteur en vapeur d'eau ou en gaz sous pression lorsqu'on effectue une régulation entre deux seuils de la valeur de la pression pendant la cuisson. Ceci permet de réaliser une circulation du fluide présent à l'intérieur de la membrane en continu, via ledit injecteur, pendant toute la durée de cuisson du pneumatique.

De préférence, ledit mélange est porté, pendant tout ou partie du cycle de vulcanisation, à une température comprise entre 150 et 205°C et à une pression comprise entre 14 et 18 bars. Il a été constaté lors des test effectués en laboratoire que l'injecteur de l'invention permet d'obtenir un mélange homogène de vapeur d'eau et d'azote à ces valeurs des paramètres nécessaires à la cuisson d'un pneumatique, tel qu'utilisé pour un véhicule de tourisme ou de poids lourd.

La description qui suit s'appuie sur les figures 1 à 2 dans lesquelles :
- la figure 1 représente une vue en coupe schématique d'un dispositif de vulcanisation comprenant un injecteur selon l'invention,
- la figure 2 représente une vue en coupe schématique de l'injecteur de l'invention.

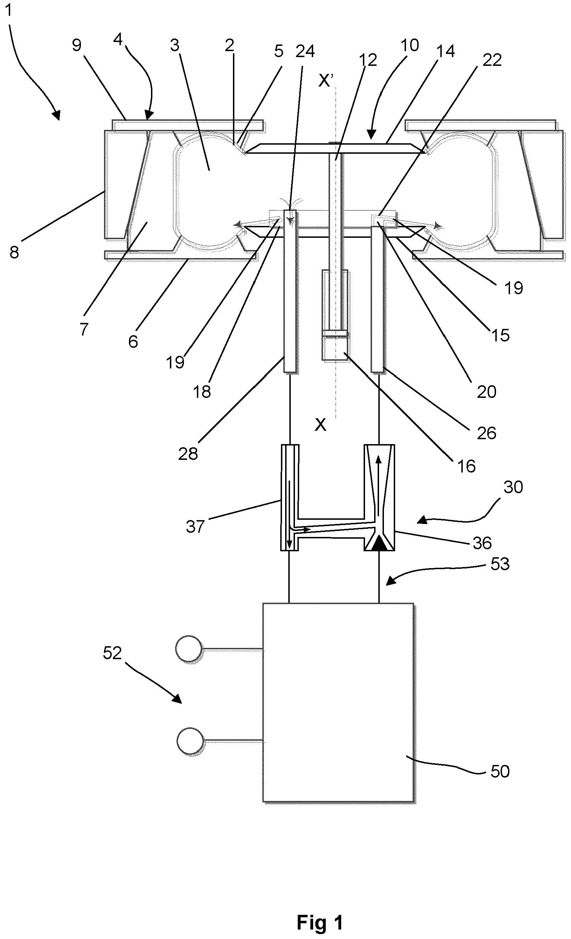

Le dispositif de vulcanisation 1 représenté à la figure 1 comprend une membrane 2 de cuisson souple qui coopère de façon connue avec un moule 4 rigide destiné à conférer sa forme extérieure au pneumatique. Le moule 4 proprement dit est formé de deux coquilles 5, 6 destinées à mouler les flancs du pneumatique et par des secteurs annulaires 7 destinés à mouler la bande de roulement. Les secteurs annulaires 7 sont animés en un mouvement de translation radiale lorsqu'ils sont entraînés en mouvement par une couronne annulaire 8 via un plateau 9 de la presse mû axialement par un vérin de celle-ci. Les surfaces internes des coquilles 5,6 et des secteurs annulaires 7 définissent en semble une enceinte de forme générale toroïdale ayant un axe de révolution X-X'.

La partie centrale 10 du moule 4 comprend un axe de manoeuvre 12, concentrique à l'axe de révolution XX' de l'enceinte, destiné à animer les plateaux supérieur 14 et inférieur 15 lors des phases d'introduction et d'extraction du pneumatique. La membrane 2 de cuisson est fixée par ses bourrelets supérieur et inférieur au plateau supérieur 14 et au plateau inférieur 15. Le plateau supérieur 14 est actionné en un mouvement de translation axiale par un vérin hydraulique 16 pour assurer les mouvements de la membrane 2 entre une position pliée de celle-ci, lors de l'introduction d'une ébauche de pneumatique à l'intérieur de l'enceinte du moule et de l'extraction du pneumatique en fin de cuisson, et une position de mise en tension de celle-ci à l'intérieur de l'ébauche en vue de la cuisson. Lors de la cuisson, la membrane 2 est expansée pour plaquer le pneumatique contre les empreintes des secteurs annulaires 7 et des coquilles 5, 6, la partie interne de la membrane délimitant ainsi une enceinte 3 de vulcanisation à l'intérieur de laquelle circule le fluide caloporteur.

Le plateau inférieur 15 de la partie centrale 10 supporte une plaque de diffusion 18 comportant plusieurs orifices 19 uniformément distribués sur sa circonférence. Les orifices communiquent avec une chambre annulaire 20 de distribution du fluide caloporteur sous pression. La chambre annulaire présente une entrée 22 et une sortie 24 de fluide reliées, la première à un conduit d'entrée 26 et la seconde à un conduit de sortie 28 du fluide caloporteur. La circulation du fluide caloporteur entre l'entrée 22 et la sortie 24 et ses paramètres de pression et température sont gérés par une unité de commande 50 via un injecteur 30 de l'invention et un circuit de fluide 53 généralement connu, tel qu'il sera expliqué par la suite. L'unité de commande 50 comporte une alimentation en énergie 52, une mémoire interne de stockage des données et un logiciel de gestion d'un cycle de fonctionnement du dispositif de vulcanisation. L'entrée dans l'unité de commande 50 reçoit des données en provenance des capteurs de pression et de température du dispositif 1 et la sortie de l'unité de commande 50 est reliée aux différentes vannes d'alimentation en vapeur d'eau et en gaz sous pression du circuit de fluide 53 dont elle commande l'ouverture et la fermeture. Les capteurs de pression et de température sont par exemple agencés à l'intérieur de la membrane 2.

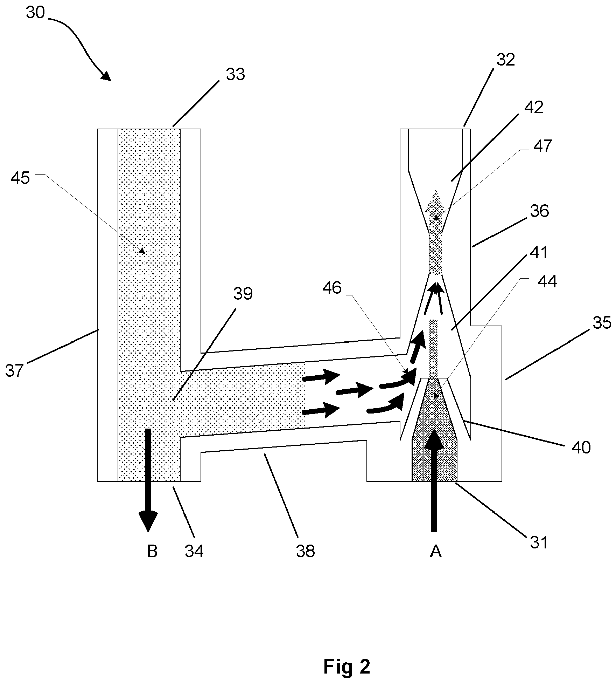

La structure et le fonctionnement de l'injecteur 30 de l'invention seront expliqués en référence à la figure 2. L'injecteur 30 est un injecteur à effet Venturi qui comprend un corps 35 comportant une première tubulure 36, une deuxième tubulure 37 parallèles entre elles et reliées ensemble par une troisième tubulure transversale 38, ces tubulures définissant un espace de circulation de fluide à l'intérieur du corps 35.

La première tubulure 36 comprend une ouverture d'entrée 31 de fluide qui est mise en communication via des raccords (non représentés sur les figures) avec un conduit d'arrivée de fluide sous pression, en provenance d'un conduit d'alimentation en vapeur ou en gaz sous pression, fluide qui entre en suivant la direction de la flèche A à l'intérieur du corps 35 de l'injecteur. Le fluide arrive dans un cône d'éjection 40 convergent qui débouche dans un cône de mélange 41 convergent. La sortie du cône de mélange 41 est reliée à l'entrée d'un cône d'injection 42 divergent. Le fluide ressort du cône d'injection 42 par une ouverture de sortie 32. L'ouverture de sortie 32 est reliée par des raccords (non représentés) au conduit d'entrée 26 de fluide dans la membrane 2.

La deuxième tubulure 37 comprend une ouverture d'entrée 33 de fluide qui est mise en communication via des raccords (non représentés sur les figures) avec un conduit d'arrivée de fluide sous pression en provenance de la membrane 2 à l'intérieur du corps 35. La deuxième tubulure 37 comprend une ouverture de sortie 34 de fluide en direction de la flèche B et un passage de communication 39 avec la tubulure transversale 38. L'ouverture de sortie 34 est reliée par des raccords (non représentés) à un conduit de vidange et de récupération de condensats du circuit de fluide 53 du dispositif de vulcanisation 1. Le conduit de vidange est relié à une soupape de vidange (non représentée).

On va expliquer dans ce qui suit le fonctionnement du dispositif de vulcanisation 1 de l'invention. On introduit une ébauche de pneumatique à l'intérieur du dispositif, l'ébauche étant maintenue dans la presse à l'aide de la membrane dans un état de préconformation à l'aide de la vapeur jusqu'à la fermeture de la presse. La vapeur est envoyée directement à l'intérieur de la membrane via la tubulure 36 de l'injecteur 30 ou par un conduit dérivé agencé en parallèle à celle-ci (non représenté).

On procède ensuite à une étape de prémoulage dans laquelle on introduit la quantité nécessaire d'azote en vue d'atteindre les consignes de pression et de température préétablies nécessaires lors de la phase suivante de cuisson. L'azote est introduit directement à l'intérieur de la membrane par le conduit dérivé jusqu'à une valeur de la pression de consigne de prémoulage p1 qui est choisie en fonction de la température de cuisson. Dans une variante, l'introduction d'azote peut se faire également via la tubulure 36 de l'injecteur 30 dans cette étape.

La température de consigne lors de la cuisson correspond à une pression donnée selon le diagramme de Mollier. Ainsi, dans un exemple de réalisation, on établit, pour la phase de cuisson, la valeur de consigne de la pression p en phase de cuisson à 16bar et la valeur de consigne de la température à 179°C. Pour une température de cuisson de 179°C, la pression de vapeur selon le diagramme de Mollier pₘ est de 9 bar. De ce fait, la pression de prémoulage de l'azote est p₁= p-pₘ, égale à 7bar dans cet exemple.

Lorsque la valeur de consigne de la pression en phase de prémoulage est atteinte, l'unité de commande 50 commande l'arrêt de l'alimentation en azote et l'envoi de vapeur à l'intérieur de la membrane 2 via l'injecteur 30, selon la flèche A. L'alimentation en vapeur par l'injecteur 30 permet une aspiration de l'azote en sortie de la membrane par effet Venturi et une homogénéisation du mélange azote-vapeur. En passant par la buse de sortie de section réduite du cône d'éjection 40, le flux de vapeur à haute pression 44 est accéléré et aspire le flux d'azote 45 de la tubulure 38 dont une partie 46 arrive dans le cône de mélange 41 et se mélange avec la vapeur. Le mélange 47 de vapeur et d'azote ainsi obtenu est injecté dans la membrane 2 à travers le cône d'injection 42, la tubulure 26 et les orifices 19. Les éventuels condensats quittent la deuxième tubulure 37 par l'orifice de sortie 34 et sont collectés dans une bouteille de stockage de condensats (non représentée). Ainsi, l'injecteur 30 de l'invention permet, pendant toute la durée d'alimentation en vapeur, d'assurer une circulation et un mélange continu de vapeur et d'azote, ce qui permet déjà d'obtenir un mélange homogène à l'intérieur de la membrane, dès le début de la cuisson.

Dès que la valeur de consigne de la pression en phase de cuisson est atteinte, on met en place une régulation permettant d'atteindre la température de consigne tout en régulant la valeur de la pression entre deux valeurs seuil, en faisant passer de la vapeur ou de l'azote en entrée de l'injecteur 30 et à maintenir le brassage du mélange azote-vapeur contenu dans la membrane afin de garantir l'homogénéité du mélange pendant toute la durée de la cuisson.

Plus particulièrement, en phase de cuisson, la régulation se fait en continu entre deux seuils de pression, pₘᵢₙ et pₘₐₓ (qui correspondent à des tolérances établies autour de la pression de consigne p). Pour ceci, des injections de vapeur ou d'azote, voire des purges de mélange lorsque nécessaire, se font au travers de l'injecteur 30, en fonction des valeurs mesurées par les capteurs de la pression et de la température à l'intérieur de la membrane 2 en les comparant aux valeurs des seuils de pression pₘᵢₙ et pₘₐₓ et de température Tₘᵢₙ et Tₘₐₓ (qui sont également des valeurs correspondant à des tolérances établies de part et d'autre de la température de consigne en cuisson T). Ainsi, lorsque la pression mesurée est inférieure à une valeur pₘᵢₙ et la température mesurée est inférieure à Tₘₐₓ, on injecte de la vapeur dans la membrane 2, via la tubulure 36 de l'injecteur 30. Si la pression mesurée est inférieure à pₘᵢₙ, mais la température est supérieure à Tₘₐₓ, on injecte de l'azote par la tubulure 36 de l'injecteur 30. Lorsque la pression mesurée est inférieure à la valeur de consigne p en cuisson et la température est inférieure à Tₘₘ, on réalise une purge suivie d'une injection de vapeur via l'injecteur 30. On arrête l'injection de fluide via l'injecteur 30 lorsque la pression mesurée est supérieure à pₘₐₓ.

Ainsi, grâce à cette régulation entre deux seuils de pression durant toute la phase de cuisson, des introductions successives de fluide ont lieu via l'injecteur 30 qui ré-aspire par la tuyauterie de sortie de l'enceinte de vulcanisation le fluide contenu dans celle-ci, ce qui permet d'entretenir pendant la cuisson un mouvement de fluide entre l'injecteur 30 et l'enceinte de vulcanisation. Ceci permet de garantir un mélange homogène pendant la cuisson et d'éviter ainsi les dissymétries thermiques dues à la stratification de l'azote lors de la cuisson. De surcroît, ceci permet également de remuer et d'évacuer les condensats de la partie inférieure de la membrane 2.

Dans un exemple de réalisation, les tubulures 37, 38 ont un même diamètre interne qui est égal au diamètre interne de l'entrée 31 et de la sortie 32 de la tubulure 36. Le diamètre de l'orifice d'entrée dans le cône de mélange 42 est égal à environ deux fois le diamètre de l'orifice de sortie du cône d'éjection 40 et à environ quatre fois le diamètre interne des tubulures 37, 38.

A la fin de la cuisson, on réalise la décompression de la membrane et on vidange le mélange par gravité en direction d'une bouteille de réception de condensats, en direction de la flèche B. On ouvre ensuite le dispositif 1 et on évacue le pneumatique.

D'autres variantes et modes de réalisation de l'invention peuvent être envisagés sans sortir du cadre de ses revendications. Ainsi, la montée en pression peut se faire de manière continue ou par paliers successifs.

## Revendications

1. Dispositif de vulcanisation (1) pour pneumatique comportant une partie centrale (10) de support d'une membrane (2) de cuisson destinée à venir se plaquer contre la partie interne d'un pneumatique, à l'intérieur d'un moule (4), la partie interne de la membrane (2) définissant une enceinte (3) de vulcanisation dans laquelle circule un fluide caloporteur sous pression qui est un mélange de vapeur et de gaz sous pression, ledit fluide caloporteur étant amené à circuler entre un conduit d'entrée (26) à l'intérieur de l'enceinte (3) et un conduit de sortie (28) de celle-ci, **caractérisée en ce qu'**il comprend un injecteur (30) disposé à l'extérieur de l'enceinte (3) de vulcanisation en étant relié aux conduits d'entrée (26) et de sortie (28) de celle-ci, ainsi qu'à un conduit d'alimentation en vapeur ou en gaz sous pression et qui est réalisé de manière à mélanger la vapeur ou le gaz sous pression en provenance du conduit d'alimentation avec le fluide sortant de l'enceinte de vulcanisation.

2. Dispositif selon la revendication 1, dans laquelle ledit injecteur (30) comprend un tube à effet Venturi raccordé aux conduits d'entrée (26) et de sortie (28) et à un conduit d'alimentation en vapeur ou en gaz sous pression.

3. Dispositif selon la revendication 2, **caractérisé en ce que** ledit tube à effet Venturi comprend une ouverture de sortie (34) qui le relie à un conduit de vidange et de récupération de condensats.

4. Dispositif selon l'une des revendications 2 ou 3, dans lequel ledit tube à effet Venturi comprend un cône convergent d'éjection (40) communiquant avec un cône convergent de mélange (41) de vapeur ou gaz sous pression en provenance d'un conduit d'alimentation avec le fluide sortant de l'enceinte (3), ledit cône de mélange (41) communiquant avec le conduit d'entrée (26) dans l'enceinte (3) via un cône divergent d'injection (42).

5. Dispositif selon l'une des revendications précédentes, dans lequel ledit injecteur (30) mélange la vapeur d'eau en provenance d'un conduit d'alimentation avec le gaz sous pression sortant de l'enceinte (3) de vulcanisation.

6. Dispositif selon l'une des revendications précédentes, dans laquelle ledit injecteur (30) mélange le fluide caloporteur de l'enceinte (3) de vulcanisation avec la vapeur d'eau ou un gaz sous pression en provenance du conduit d'alimentation.

7. Dispositif selon l'une de revendications précédentes, dans lequel le gaz sous pression est choisi parmi : l'azote, l'hydrogène ou l'air comprimé, pris seuls ou en combinaison.

8. Procédé de vulcanisation **caractérisé en ce qu'**il utilise un dispositif (1) selon l'une des revendications précédentes.

9. Procédé de vulcanisation selon la revendication 8, **caractérisé en ce que** l'on alimente ledit injecteur (30) en vapeur d'eau après avoir introduit préalablement le gaz sous pression dans l'enceinte (3) de vulcanisation.

10. Procédé de vulcanisation selon l'une des revendications 8 ou 9, **caractérisé en ce qu'**on alimente ledit injecteur (30) en vapeur d'eau ou en gaz sous pression lorsqu'on effectue une régulation entre deux seuils (pₘᵢₙ, pₘₐₓ) de la valeur de la pression pendant la cuisson.

11. Procédé selon l'une des revendications 8 à 10, dans lequel ledit mélange est porté, pendant tout ou partie du cycle de vulcanisation, à une température comprise entre 150 et 205°C et à une pression comprise entre 14 et 18 bars.

## Patentansprüche

1. Vulkanisationsvorrichtung (1) für einen Reifen, umfassend einen Mittelteil (10) zum Stützen einer Vulkanisationsmembran (2), die dazu bestimmt ist, im Inneren einer Form (4) gegen den inneren Teil eines Reifens gedrückt zu werden, wobei der innere Teil der Membran (2) einen Vulkanisationsbehälter (3) definiert, in dem eine Wärmeträgerflüssigkeit unter Druck zirkuliert, die ein Gemisch aus Dampf und Druckgas ist, wobei die Wärmeträgerflüssigkeit dazu gebracht wird, zwischen einer Einlassleitung (26) innerhalb des Behälters (3) und einer Auslassleitung (28) von diesem zu zirkulieren, **dadurch gekennzeichnet, dass** sie einen Injektor (30) aufweist, der außerhalb des Vulkanisationsbehälters (3) angeordnet ist, indem er mit der Einlass- (26) und Auslassleitung (28) von diesem und einer Dampf- oder Druckgaszufuhrleitung verbunden ist, und der derart ausgebildet ist, um den Dampf oder das Druckgas aus der Zufuhrleitung mit der Flüssigkeit zu vermischen, die aus dem Vulkanisationsbehälter austritt.

2. Vorrichtung nach Anspruch 1, wobei der Injektor (30) ein Venturi-Rohr aufweist, das an die Einlass- (26) und Auslassleitung (28) und an eine Dampf- oder Druckgaszufuhrleitung angeschlossen ist.

3. Vorrichtung nach Anspruch 2, **dadurch gekennzeichnet, dass** das Venturi-Rohr eine Auslassöffnung (34) aufweist, die es mit einer Leitung zum Entleeren und zum Rückgewinnen von Kondensaten verbindet.

4. Vorrichtung nach einem der Ansprüche 2 oder 3, wobei das Venturi-Rohr einen konvergierenden Ausstoßkegel (40) aufweist, der mit einem konvergierenden Kegel (41) zum Mischen von Dampf oder Druckgas aus einer Zufuhrleitung mit der Flüssigkeit, die aus dem Behälter (3) austritt, in Verbindung steht, wobei der Kegel zum Mischen (41) über einen divergierenden Einspritzkegel (42) mit der Einlassleitung (26) in das Gehäuse (3) in Verbindung steht.

5. Vorrichtung nach einem der vorhergehenden Ansprüche, wobei der Injektor (30) den Wasserdampf aus einer Zufuhrleitung mit dem Druckgas vermischt, das aus dem Vulkanisationsbehälter (3) austritt.

6. Vorrichtung nach einem der vorhergehenden Ansprüche, wobei der Injektor (30) die Wärmeträgerflüssigkeit des Vulkanisationsbehälters (3) mit dem Wasserdampf oder einem Druckgas aus der Zufuhrleitung vermischt.

7. Vorrichtung nach einem der vorhergehenden Ansprüche, wobei das Druckgas ausgewählt ist aus: Stickstoff, Wasserstoff oder Druckluft, allein genommen oder in Kombination.

8. Vulkanisierungsverfahren, **dadurch gekennzeichnet, dass** es eine Vorrichtung (1) nach einem der vorhergehenden Ansprüche verwendet.

9. Vulkanisierungsverfahren nach Anspruch 8, **dadurch gekennzeichnet, dass** dem Injektor (30) Wasserdampf zugeführt wird, nachdem zuvor das Druckgas in den Vulkanisationsbehälter (3) eingeführt worden ist.

10. Verfahren nach einem der Ansprüche 8 oder 9, **dadurch gekennzeichnet, dass** dem Injektor (30) Wasserdampf oder Druckgas zugeführt wird, wenn eine Regulierung zwischen zwei Schwellen (Pₘᵢₙ, Pₘₐₓ) des Wertes des Drucks während der Vulkanisation durchgeführt wird.

11. Verfahren nach einem der Ansprüche 8 bis 10, wobei das Gemisch während des gesamten oder eines Teils des Vulkanisationszyklus auf eine Temperatur zwischen 150 und 205 °C und auf einen Druck zwischen 14 und 18 bar gebracht wird.

## Claims

1. Vulcanizing device (1) for a tyre comprising a central part (10) for supporting a curing bladder (2) intended to be pressed firmly against the internal part of a tyre, inside a mould (4), the internal part of the bladder (2) defining a vulcanizing chamber (3) in which there circulates a pressurized heat-transfer fluid which is a mixture of steam and of pressurized gas, the said heat-transfer fluid being made to circulate between an inlet pipe (26) leading into the chamber (3) and an outlet pipe (28) leaving the chamber, **characterized in that** it comprises an injector (30) arranged outside the vulcanizing chamber (3) while being connected to the chamber inlet (26) and outlet (28) pipes, and to a steam or pressurized-gas supply pipe and which is produced in such a way as to mix the steam or the pressurized gas coming from the supply pipe with the fluid leaving the vulcanizing chamber.

2. Device according to Claim 1, in which the said injector (30) comprises a Venturi-effect tube connected to the inlet (26) and outlet (28) pipes and to a steam or pressurized-gas supply pipe.

3. Device according to Claim 2, **characterized in that** the said Venturi-effect tube comprises an outlet opening (34) which connects it to a condensate drain and collection pipe.

4. Device according to one of Claims 2 and 3, in which the said Venturi-effect tube comprises a convergent ejection cone (40) communicating with a convergent mixing cone (41) that mixes steam or pressurized gas coming from a supply pipe with the fluid leaving the chamber (3), the said mixing cone (41) communicating with the chamber (3) inlet pipe (26) via a divergent injection cone (42).

5. Device according to one of the preceding claims, in which the said injector (30) mixes the steam coming from a supply pipe with the pressurized gas leaving the vulcanizing chamber (3).

6. Device according to one of the preceding claims, in which the said injector (30) mixes the heat-transfer fluid of the vulcanizing chamber (3) with the steam or a pressurized gas coming from the supply pipe.

7. Device according to one of the preceding claims, in which the pressurized gas is chosen from: nitrogen, hydrogen or compressed air, considered alone or in combination.

8. Vulcanizing method, **characterized in that** it uses a device (1) according to one of the preceding claims.

9. Vulcanizing method according to claim 8, **characterized in that** the said injector (30) is supplied with steam after the pressurized gas has previously been introduced into the vulcanizing chamber (3).

10. Vulcanizing method according to claim 8 or 9, **characterized in that** the said injector (30) is supplied with steam or with pressurized gas when the value of the pressure during curing has been regulated between two thresholds (pₘᵢₙ, pₘₐₓ).

11. Method according to one of Claims 8 to 10, in which the said mixture is brought, for all or part of the vulcanizing cycle, to a temperature comprised between 150 and 205°C and to a pressure comprised between 14 and 18 bar.
